Europäisches Patentamt

**European Patent Office**

Office européen des brevets

(19)

(11) Publication number:

**0 350 421**
**A2**

(12) **EUROPEAN PATENT APPLICATION**

(21) Application number: **89480061.4**

(22) Date of filing: **25.04.89**

(51) Int. Cl.⁵: **H 04 L 12/00**

(30) Priority: **28.06.88 US 211656**

(43) Date of publication of application:
**10.01.90 Bulletin 90/02**

(84) Designated Contracting States: **DE FR GB**

(71) Applicant: **International Business Machines Corporation**
**Old Orchard Road**
**Armonk, N.Y. 10504 (US)**

(72) Inventor: **Barker, Barbara A.**
**2800 Carmel Drive**
**Round Rock Texas 78664 (US)**

**Edel, Thomas R.**
**9410 Topridge Drive**
**Austin Texas 78750 (US)**

**Stark, Jeffrey A.**
**2905 Valleyview Drive**
**Grapevine Texas 76051 (US)**

(74) Representative: **Tubiana, Max**
**Compagnie IBM France Département de Propriété**
**Intellectuelle**
**F-06610 La Gaude (FR)**

(54) **Generalized data stream transform service.**

(57) A procedure transforms a level of a universal data stream not supported or required by an application into a level that is supported or required by the application. The function, parameters and options of a universal data stream are described, and this information is used in conjunction with application supplied information to determine which of available function, parameters and options, based on the application running, the task requested and the capabilities of the system are to be used during system interpretation and transformation of the data stream. More accurate interpretation and transformation of the data stream is provided insuring that data loss and function misinterpretation are minimized. Operator flexibility is improved because depending on the function level supported, the system can decide to transform a function to a more manageable representation. Further, the interchange data stream can be optimized enhancing overall system useability.

EP 0 350 421 A2

Description

## GENERALIZED DATA STREAM TRANSFORM SERVICE

BACKGROUND OF THE INVENTION

Field of the Invention

The present invention generally relates to digital communications and, more particularly, to system determination and selection of function, parameters and options during system transformation of a data stream to facilitate application processing of the transformed data stream.

Description of the Prior Art

The management of a data stream in a digital communications network, such as a local area network (LAN) or larger teleprocessing networks, presents many problems, particularly where the data streams generated at various terminals of workstations operating with a variety of application programs generate data streams which have different control characters and protocols. To better understand the problem, consider a hypothetical teleprocessing network supporting communications between two or more end users. The end users may be an application program, a storage device or an operator at a display terminal. Serving the end users are a set of communications functions dealing with the language, including formatting, translation and/or editing, dialogue discipline to control data flow, transmission control including flow rate control and sequence control, and transportation including passage of signals through a more or less complex transmission network between addressable units.

The biggest challenge to end users within this network is data interchange. Solutions that address specific instances of the interchange problem, such as IBM's Revisable Format Document Content Architecture (RFTDCA), have been provided, but more general solutions based on accepted standards have been slow to develop. The main reason a universal data stream has not been defined is because agreement as to the requirements for the interchange of different data types has yet to be reached. Complete mobility of data in a network of diverse communicating systems and applications has not been achieved, and will not be attainable until a method incorporating and supporting function from a variety of systems and applications has been prescribed.

A universal data stream would provide a medium for the achievement of meaningful data interchange. Although such a data stream is intended to be understood and supported by each of the end users in a network, the interchange dilemma cannot be completely solved until function and interchange sets have been defined and transforms have been specified in a system interpretable format.

Interchange sets are collections of function sets of a universal data stream. A function set is defined to delineate a major functional group within a universal data stream. Further qualification within that functional group is necessary in order to distinguish levels of a function set. Levels are divisions within a function set and are subset/superset related. The lowest level of a function set is designated as the base. The next level is defined as a superset of the base and as a proper subset of the next higher level. In order to delimit a group of function sets and to describe a level of support specific to a particular class of end users, an interchange set is defined. As with function sets, interchange sets are subsetted to allow for a detailed description of the functional content of a data stream to be communicated within a specific instance of that data stream.

Because of differences in functionality and internal processing requirements, end users are inherently dissimilar, and the need exists to interchange different levels of a universal data stream. Although such a data stream can be structured to represent all possible functional levels, uniqueness among end user classes requires that data transformations to and from a universal data stream be performed before transmission in an interchange network, or before processing by one of the end users. Problems with transforms occur when there are function mismatches between a transmitted level of a universal data stream and a level of a universal data stream supported by an end user. Situations of this type usually result in data loss and/or misinterpretation of how function or data could be represented in either an interchange or end user specific format.

Today, interchange and function sets are documented externally to the interchange environment and are not stored in an interchangeable format. The contents of interchange and function sets are agreed to by end user groups and documented in writing. There is no method provided for communicating this information in a teleprocessing network. End user formats different from the interchange format require a transform of the data stream before processing by an end user can occur. Typically, these transforms occur in a batch mode with limited input from an operator and are written by a specific end user for the sole purpose of participating in interchange. Transforms of this type cannot be generally applied on a system to system or an application to application basis within a network and do not fully exploit the options and capabilities of a universal data stream.

What is needed to better utilize these options and capabilities is a method to transform a level of a universal data stream not supported or required by an end user into a level that is supported or required. This method implies that interchange and function sets of a universal data stream are required to be defined and stored in interchange format.

## SUMMARY OF THE INVENTION

It is therefore an object of the present invention to provide, in a digital communication system supporting a variety of diverse end user types, a procedure for transforming a level of a universal data stream not supported or required by an application into a level that is supported or required.

According to the invention, a method is provided by which the function, parameters and options of a universal data stream are described and thereby understood by a data stream processing system, and are then used in conjunction with application supplied information (e.g., function and parameters supported and options provided) to determine which of available function, parameters and options, based on the application running, the task requested and the capabilities of the system, are to be used during system interpretation and transformation of the data stream.

To describe function, parameters and options, the universal data stream architecture provides data stream level function set triplet parameters and object level function set triplet parameters that appear on the structured field (Begin Document -- BDT) that marks the beginning of the sequence of structured fields that describe the content of the data stream. These triplets are used to specify each object or data stream function set content present or referenced in the data stream. The Object Function Set Specification triplet contains four parameters, i.e., object type, version, data stream function set definition, and object function set definition, that are required, and one parameter, object function set definition extension, that is optional.

The object type specifies the kind of object or resource whose function set is being defined; each object type or resource is distinguished by a unique code assigned by the data stream architecture. The version parameter contains the architecture level of the object or resource content architecture included as part of the architecture for the universal data stream. The data stream function set definition specifies the function sets for the group of data stream constructs identified by the object type parameter. The function set levels are supersets of each other and are built on top of a base function set. The parameter is a bit string, and the value specifies the function set of the identified object or resource.

The base function set and each level are defined by the data stream architecture. The object function set definition parameter specifies the function sets for the object or resource specific constructs, and is used for defining function sets for an object or resource architecture containing a single functional area. The object function set definition extension parameter can be used to define function sets for an object or resource architecture containing multiple function areas. As in the case of the data stream function set definition parameter, the object function set definition and extension parameters define the function sets as supersets built on top of a base.

The Data Stream Function Set Specification triplet contains two parameters. The first parameter specifies the unique code assigned by the universal data stream architecture to the name of a data stream function set. The second parameter is a bit string that defines the function sets for the group of data stream constructs identified by the code in the first parameter. As with the other function set definition parameters, this parameter defines a base level and supersets. The data stream constructs included in the base and superset levels of a function set are specified by the data stream architecture.

Also included on the BDT structured field is the Data Stream Interchange Set triplet. An interchange set is a specific group of data stream and object/resource function sets. This triplet specifies the interchange set type in the first parameters and the registered interchange set definition in the second. The interchange types are presentation, revision, resource, and any combinations of these three types. The registered interchange set definition parameter defines the data stream level of the registered interchange set of the type specified by the interchange set type parameter. Each level is identified by a code assigned by the data stream architecture and are subset/superset related.

Other triplets on BDT that convey universal data stream function and options are Data Stream Organization, Global Character Set Identifier (Binary or Character), and Font Character Set Identifier. The Character Global Character Set Identifier and the Font Character Set Identifier are Fully Qualified Name triplet types.

The contents of each function and interchange set are stored as tabular resources that can be accessed by the data stream processing system during interpretation and transformation of the data stream content. If more than one construct can be selected to represent a function of the data stream, then the optional construct is specified in an options column associated with the appropriate data stream entry in the table resource.

For example, a Tag Logical Element (TLE) structured field is contained in the function set used to indicate data reference or inclusion. This structured field contains parameters that can be selected to express a reference to a named data stream construct that contains data, formatting or processing information. A Fully Qualified Name (FQN) triplet is used to directly reference the name of the construct containing the required information. If this construct is referenced multiple times in the data stream, each occurrence of the reference must be accessed for update if the operator decides that a different construct should be referenced. Indirect referencing is an optional way to represent the function that is a reference to a named construct. A Resource Local Identifier (RLID) triplet is used to indirectly reference the named construct containing the required

3

EP 0 350 421 A2

information. A RLID triplet is more flexible because it contains a numeric identifier (LID) that is associated via a mapping structured field to the named construct. Now, if the operator decides to change the construct being referenced, only the mapping structured field need be accessed and changed.

A tabular resource describing the two options can be represented by a matrix structure. The matrix contains one entry for each data stream construct in a function set. For each construct, a list of required and optional parameters is provided. If there are optional ways to represent a function, these options are indicated in a parameter options column. In this way all data stream constructs, parameters and options can be described in tabular format as a universal data stream resource and accessed during processing.

The request to transform a level of the universal data stream into another level is initiated by the application to the transform service after detecting that the interchange level is not supported or that another level is needed in order for the application to do required processing. The application calls the transform service supplying the level to which the data stream is to be transformed and any other information that the transform service needs to be able to determine and select the required data stream function, parameters and options. An example of other supplied information is the requirement for data to be presented in image or graphics only format. This information is transmitted as a tabular resource containing supported or requested function, parameters and options. This structure is then accessed by the transform service during the data stream interpretation and transformation process in order to determine which function to include in the transformed data stream and to select the optimal representation of the function for the requesting application based on the task requested and the capabilities of the system that will process the transformed data stream.

In some instances, the system can make decisions during transformation that do not require explicit application input. Examples of this are to resolve unresolved references or to replace multiple occurrences of the same data object to a reference to the data object in a resource group.


## BRIEF DESCRIPTION OF THE DRAWINGS

The foregoing and other objects, aspects and advantages of the invention will be better understood from the following detailed description of a preferred embodiment of the invention with reference to the drawings, in which :

Figure 1 is a block diagram illustrating a data stream example;

Figure 2 is a system block diagram showing a local work station running several applications and communicating with a network;

Figure 3 is a block diagram illustrating the operations involved when an application sends a request to a transform device;

Figure 4 is a block diagram illustrating the interaction of an application with an options list;

Figure 5 is a flow diagram showing the logic of the data stream processor and transform service;

Figure 6 is a flow diagram showing the logic of the begin data stream process called by the logic shown in Figure 5;

Figure 7 is a flow diagram showing the logic of the option table build process called by the logic shown in Figure 5;

Figure 8 is a flow diagram showing the logic of the optimize index entries called by the logic shown in Figure 5; and

Figure 9 is a flow diagram showing the logic of the build interchange data stream process called by the logic shown in Figure 5.


## DETAILED DESCRIPTION OF THE PREFERRED EMBODIMENT OF THE INVENTION

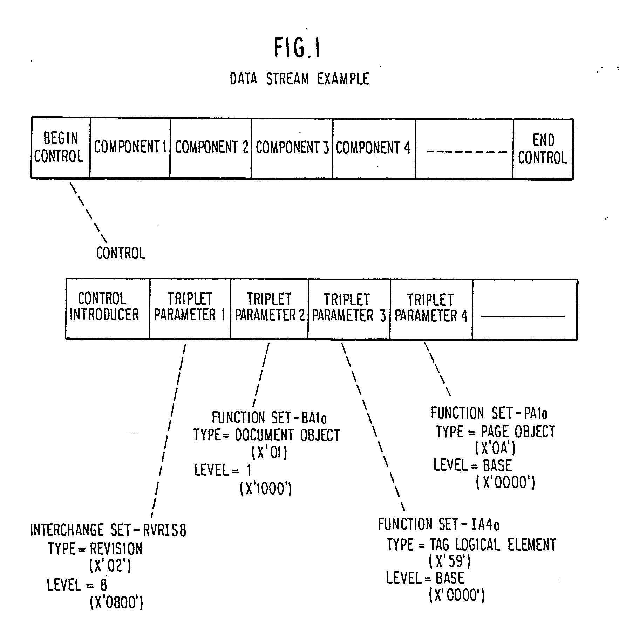

The preferred embodiment for the practice of the present invention is within an interchange data stream that is a serial representation of an architecture that specifies and defines interchange and function sets of that architecture and requires that the functional level of the controls and commands of the architecture be indicated within each specific instance of the interchange data stream. Interchange and function set levels are described by way of interchange and function set triplet parameters appearing on the control identifying the start of the data stream (BDT). An example of an interchange data stream as described by this invention and the details of the begin control, triplet parameters and parameter content are illustrated in Figure 1.

An interchange set triplet identifies the interchange set type and defines the data stream level for that interchange set type. Interchange set types include presentation, revision and resource data streams. These three types may be combined in a single data stream to define additional interchange set types. A function set triplet specifies an object or data stream function set that is present or referenced in the interchange data stream. This specification identifies the function set type and defines the level of the function set present in the data stream. The content of interchange and function sets are defined as resources that can be accessed and interpreted by an interchange data stream process or by any other intelligent process such as a data stream transform service.

As shown in Figure 1, a function or interchange set triplet includes a parameter that identifies the function or interchange set type and another parameter that specifies the level of the identified function or interchange

4

set. Since an interchange set is a specific group of function sets, the interchange set type uniquely identifies a specific functional group within the architecture. Function sets are grouped together to satisfy system and application interchange requirements. Each object and data stream function set type is identified by a unique code assigned by the data stream architecture. Function and interchange set levels are built on top of a base function set and are supersets of each other. A bit string or other suitable parameter is used to stipulate the identified interchange or function set level. For example, if a bit string parameter is used to specify a function set level, all "0's" could be defined to represent the presence of the base function set. A "1" in the leftmost bit position could be defined to indicate level 1 of the function set, a "1" in the bit position next to the leftmost bit position could be defined to indicate level 2, and so on. If an architected code is used to specify an interchange set level, a value of X'0000' could be assigned to the base of a given interchange set type. A value of X'0100' could be assigned to the next level indicating that the level is a superset of the previous level (X'0000'), and the succeeding level could be indicated by a value of X'0200' and would be a superset of X'0100'. Each of the remaining levels would be assigned a code indicating its relationship to the preceding and succeeding levels within an interchange set.

A Tag Logical Element (TLE) control is part of the function set class indicating data reference or inclusion. This control has parameters that can be selected to define a reference to a named data stream construct that contains data, formatting or processing information. A Fully Qualified Name (FQN) triplet parameter on the TLE control is used to directly reference the name of that construct. If this construct is referenced multiple times, each occurrence of the reference in the data stream must be accessed for update if the operator wants to reference a different construct. Indirect referencing is an optional way to provide a reference to a named construct. If an indirect reference is desired, a Resource Local Identifier (RLID) triplet parameter is placed on the TLE to reference the construct containing the required information. The RLID function is more flexible because it contains a coded identifier (LID) parameter that can be associated via a mapping function to any named construct. If this function is provided and the operator should decide to change the referenced construct, only the LID parameter on the mapping function need be accessed and changed.

The architecture definition of the TLE function set resource is illustrated in Table 1.

## TABLE 1

```
                 Function Set Resource
Begin Function Set Definition
        name = IA4a
        construct = Tag Logical Element (TLE)
        parameter = Fully  Qualified  Name  (FQN  -  Name


            Reference)
        option = Resource Local ID (RLID - Id
            Reference)
Begin Level 1
        name = IA4a(1)
        parameter = Resource Local ID
            option = Fully Qualified Name
        parameter = Pass Parameter Value
            option = None

        .

        .

        .

End Level 1 End Function Set Definition
```

For real-time use, this definition could be represented by any data structure that facilitates access of the data for system or application use. An example of such a data structure, a matrix, is shown in Table 2.

TABLE 2

Matrix Representation of Function Set FS
Name = IA4a

| Construct | Level | RPARM | OPT |
|-----------|-------|-------|-----|
| TLE | 0 | FQN | RLID |
| | 1 | RLID | FQN |
| | | PPV | N/A |

This matrix allocates one entry for each data stream construct in the function set. A column for required and optional parameters is also provided. As more than one representation of the reference construct function is possible, a parameter options column is used to indicate the possible options. This representation method assures that all constructs, parameters and options of a function set are describable as a resource that can be made available and accessible to supporting systems and applications during data stream processing.

The request to transform one level of the data stream into another level may be initiated by either a system or an application after detecting a lack of support for a specified interchange level or after being notified that another level is required before processing of the data stream can continue. The system or application calls the transform service supplying the level to which the data stream is to be transformed and any other information that the transform service might need in order to be able to intelligently determine and select required data stream function, parameters and options. An example of other information that might be supplied is a requirement that data be presented in image or graphics only format. This requirement would be transmitted to the transform service with other supported or requested function, parameters and options. The information would then be accessed during the interpretation and transformation process in order to determine which function should be included in the transformed data stream and to select the optimal representation of that function for the requesting system or application according to the task requested and the capabilities of the system on which the transformed data stream is to be processed.

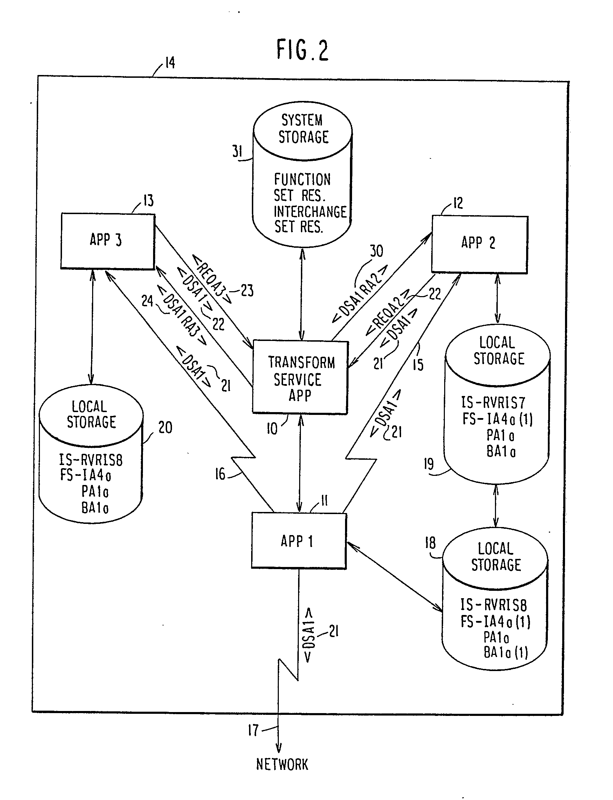

For a more detailed understanding of this invention, reference is next made to Figure 2 of the drawings. In this figure, there is illustrated a transform service application 10 connected to applications 11, 12 and 13 which are in turn connected to each other within system 14. Application 11 has generated data stream 21 and transmitted it on communication lines 15 and 16 to applications 12 and 13, respectively. Application 11 has also sent data stream 21 on communication line 17 to the network for transmission to an application located in another system. Local storage 18, 19 and 20 contain information about the level of interchange and function sets supported by each of applications 11, 12 and 13. The interchange and function set information contained in local storage 18 is inserted at the beginning of data stream 21 prior to being sent by application 11.

After receipt of data stream 21, application 12 compares the interchange and function set information contained in data stream 21 with the corresponding information in local storage 19. Since there is a difference in the interchange and function set levels and application 12 desires to revise data stream 21, a request 22 is submitted to transform service application 10 to transform data stream 21 to the level supported by application 12. Included in request 22 is a copy of the interchange and function set information from local storage 19 and data stream 21. Transform service application 10 accesses system storage 31 to retrieve the descriptions of the interchange and function set levels contained in data stream 21 and in request 22.

After a comparison of the differences, transform service application 10 notes that application 12 supports FS -IA4a(1) which allows both direct and indirect name references. The contents of FS - IA4a and IA4a(1) are shown in Tables 1 and 2 above. Since indirect referencing is more efficient than direct name referencing, transform service application 10 elects to use the indirect referencing function provided in FS - IA4a(1) and change all direct references to indirect for inclusion in the transformed data stream. The other functions contained in data stream 21 are transformed according to the lower level supported by application 12 and returned to application 12 in data stream 30. At this point application 12 can elect to manipulate the contents of data stream 30 or to store data stream 30 on local storage 19 for later use.

Figure 2 also shows that a similar request 23 from application 13 has been processed by transform service application 10 and returned to application 13 in data stream 24.

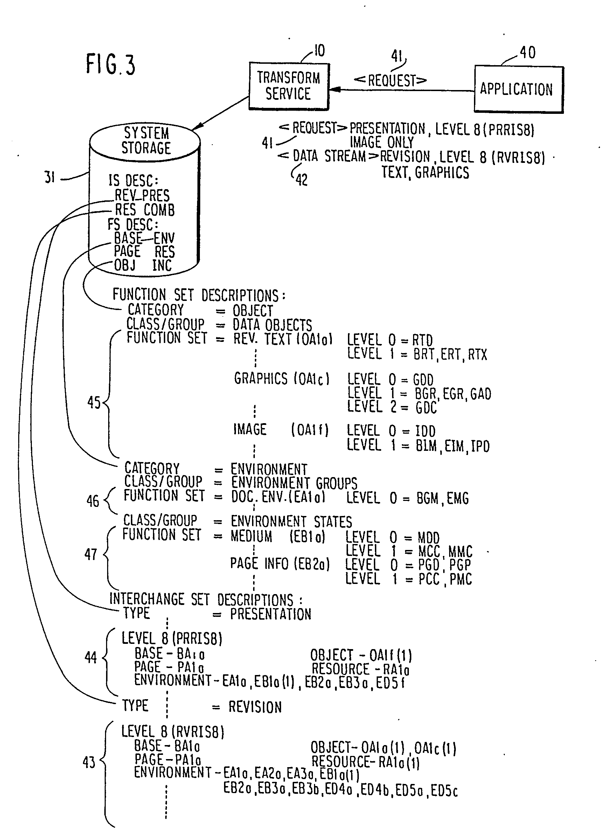

Figure 3 shows a request 41 being sent to transform service application 10 from application 40. Request 41 is to transform data stream 42 to a presentation level 8 interchange data stream containing image only data. Data stream 42 is a revision level 8 interchange data stream with both text and graphics data. Before request 41 can be processed, transform service application 10 must access the descriptions of the respective presentation and revision interchange levels. The descriptions are located on system storage 31.

Description 43 details the names of the function set contents of a revision level 8 interchange (RVRIS8) data stream, and description 44 details the names of the function set contents of a presentation level 8 interchange (PRRIS8) data stream. The contents of the object function sets, text (OA1a(1)) and graphics (OA1c(1)), in RVRIS8 are shown in description 45. Descriptions 46 and 47 relate the contents of EA1a, EB1a(1) and EB2a, which are function sets belonging to the environment category that are part of RVRIS8. It is to be presumed that similar descriptions for the other function sets in RVRIS8 as well as PRRIS8 exist in system storage 31 and are accessible to transform service application 10.

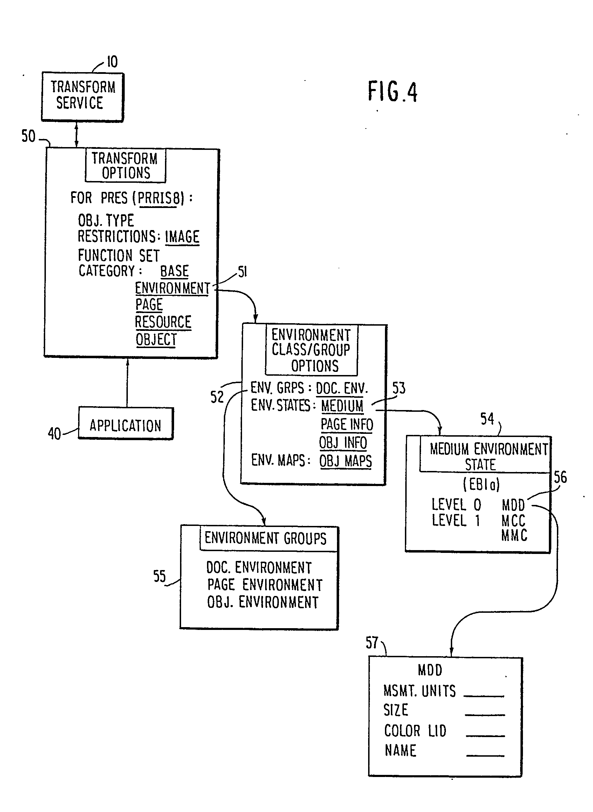

After accessing the interchange and function set descriptions, transform service application 10 determines the options available for the interpretation and transformation of data stream 42. If additional input from application 40 is required, transform service application 10 generates an options list for presentation to application 40. The interaction of application 10 with options list 50 is shown in Figure 4. If request 41 in Figure 3 had not included the interchange type or level, a request to input this information via a prompt, "Enter IS Type and Level", could have been made by transform service application 10 to application 40 prior to the generation of the options list. Also, if the object type of the transformed data stream is to be restricted, such as image only, this information could be keyed to the options list under object type restrictions by application 40 or in response to an "Any object type restrictions?" prompt from transform service application 10.

The first panel of options list 50 in Figure 4 contains selectable function set categories for PRRIS8 interchange set. If environment category 51 is selected, a subsequent options list 52 is presented to application 40 showing the environment classes and groups. If environment state 53 is selected, another options list 54 would be presented. Options list 54 displays the function set and level prescribed by PRRIS8. Selection of function set 56 from options list 54 would cause the parameter and a value input field to be displayed as shown in panel 57. Selection of a class/group heading from options list 52 could also be provided. In this case, a selection would cause all possible class/group options to be displayed as shown in options list 55. Selection of a specific class/group option from options list 55 would cause the details of those options to be displayed in a subsequent options list. Options specified in this manner would be applied during transformations as if included as part of PRRIS8.

In some instances, since transform service application 10 has access to all options in system storage 31 in Figure 3, transform service application 10 can make decisions during transformation that do not require explicit application input. Examples of decisions of this type are to resolve unresolved references or to replace multiple occurrences of the same data object with a single reference to a data object in a resource group. As a result, explicit interaction with options lists 50, 52, 54, 55, or 57, as shown in Figure 4, is not always required or necessary.

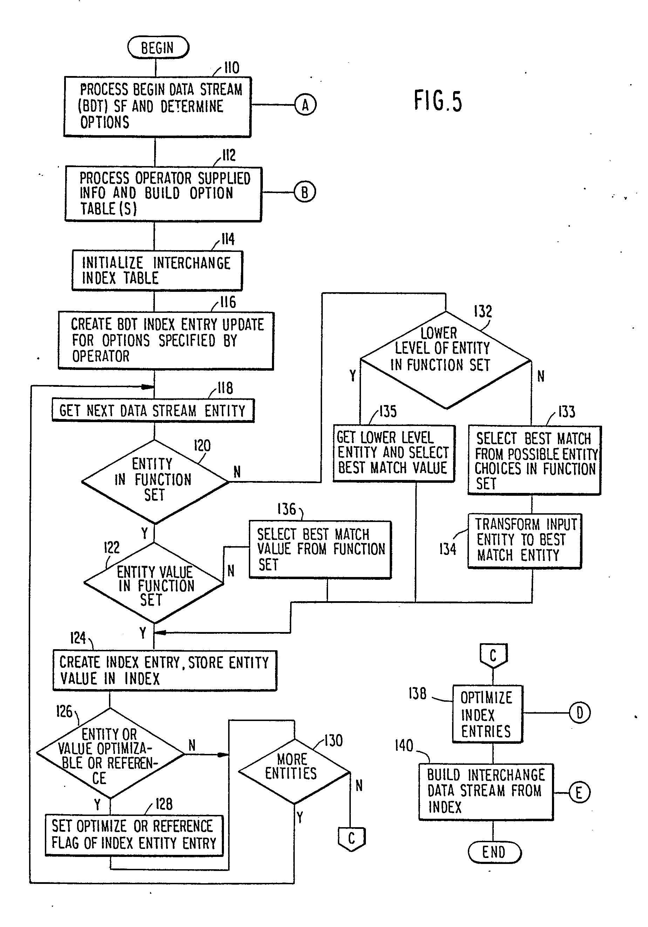

Reference is next made to the flow chart of Figure 5 which illustrates system operations for implementing a generalized data stream processor and transform service according to the invention. Before activating this service, it is assumed that the data stream has been validated by the system, that a transform request has been initiated, and that specific information on the task and application has been supplied.

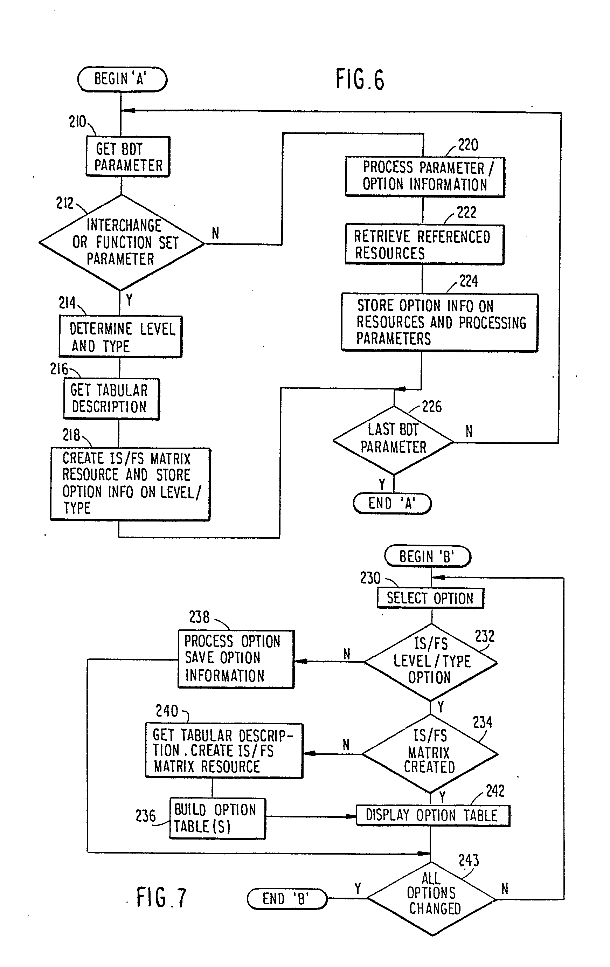

The process begins by accessing the Begin Data Stream (BDT) structured field and determining the available options in block 110. Details of the logic of this process are shown in Figure 6, to which reference is now made. The first BDT parameter is processed in block 210. The parameter type is tested in decision block 212. If the type is an interchange or function set parameter, control flows to block 214 where the level and type are determined. The tabular description for the interchange or function set level and type is accessed in function block 216. The process uses this information to create an interchange or function set matrix resource and to store any option information associated with the level or type in block 218. A test is made in decision block 226 to determine if this is the last BDT parameter, and if not, control loops back to block 210. If the parameter type tested in decision block 212 is not an interchange or functions set parameter, control passes to function block 220 where the parameter and option information are processed. Any resources referenced by the parameter are retrieved in function block 222. Option information for referenced resources and processing parameters are stored in block 224. If the test in decision block 226 showed that the last BDT parameter has been processed, then control continues at function block 112 of Figure 5.

Next, the operator supplied information is processed and combined with the options determined in function block 110 to build the option table or tables to be presented to the application or operator. This action is shown in more detail in Figure 7, to which reference is now made. After presentation of the option table, the system waits for an option to be selected in block 230. A test is made in decision block 232 to determine if the option selected is an interchange or function set level or type. If it is, control flows to decision block 234 where a test is made to determine if the interchange or function set matrix has already been created. If not an interchange or function set option type, the option is processed and the option information saved in function block 238.

At this point, control flows to decision block 243, where a test is made to determine if all desired options have been changed. If there are more options to change, control returns to function block 230. If in decision block 234, the interchange or function set matrix needs to be created, control flows to function block 240, where the tabular description of the interchange or function set is retrieved, and into block 242, where building of the option table or tables occurs. At this point, control flows to function block 236, where the created option table is displayed. Next control flows to decision block 243. If at decision block 234, the test determined that the interchange or function set matrix has already been created, then the option table is displayed in function block 236. Since a new option table implies additional options to change, the test in decision block 243 will cause control to continue at block 230. After all options have been changed, control returns to function block 114 in Figure 5.

At this point, the interchange index table is initialized. In function block 116, a BDT index entry is created and linked in the index table. The entry contains updates for those options specifically changed by an application or operator. Next, control flows to block 118 where the process gets the next data stream entity. A test is made in decision block 120 to determine if the entity is in a function set specified for the transformed data stream. If it is, control flows to decision block 122 to test the entity value. If the entity is not in a transform data steam function set, then a test is made in decision block 132 to determine if a lower level of the entity is in the specified function set. If it is, the lower level entity with a best match value is selected in function block 135. If not, control flows to block 133 where a best match entity from all possible entity choices is selected. In block 134, the input entity is transformed to the best match entity. If the test in decision block 122 shows that the entity value is in the function set, control flows to function block 124. If not in the function set, a best match value is selected from the possible values in the function set in block 136. From blocks 134, 135 and 136, control continues at block 124, where an index table entry is created and linked into the table. The entity and value are stored in the index entry. A value in this description can be any structured field parameter, which in turn can be any number of attribute/value pairs.

Next, a test is made in decision block 126 to determine if the entity or value is optimizable or if the entity is a reference. If either condition is satisfied, control flows to function block 128 where the optimize or reference flag of the entity index entry is turned on. If not optimizable or a reference, control flows to decision block 130. In decision block 130, a test is made to determine if there are more entities to transform. If there are, control returns to block 118. If not, control flows to function block 138 where a process is called to optimize the entries in the index table.

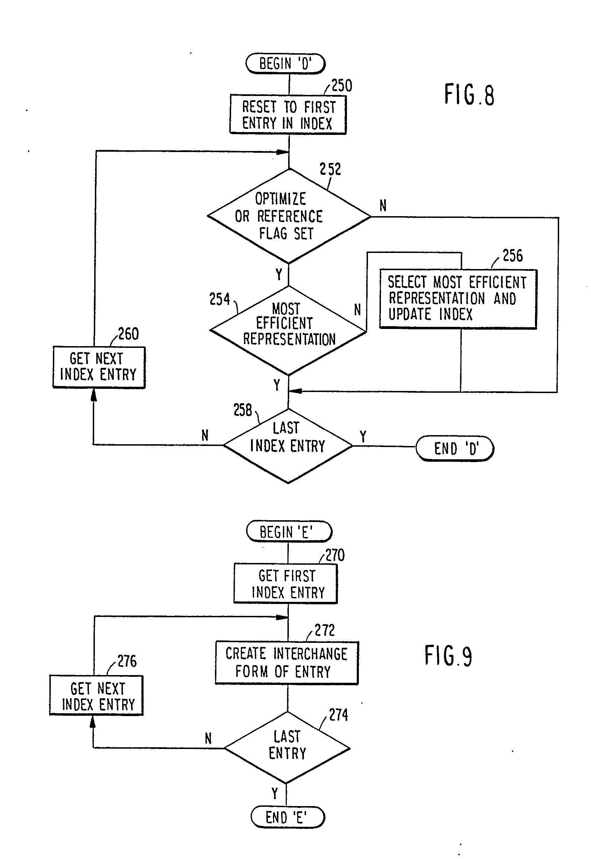

The process called in function block 138 is illustrated in Figure 8, to which reference is now made. First, in block 250, the index entry pointer is reset to the first entry in the index. A test is made in decision block 252 to see if the optimize or reference flag is set for the index entry. If it is, control flows to decision block 254, where a test is made to determine if the representation of the index entry is the most efficient form. If it is, control flows to decision block 258. If not, the process selects the most efficient representation of the function for the transformed data stream and updates the index entry in function block 256, and control flows to decision block 258. If the test in decision block 252 shows that the optimize or reference flag is active, then control flows to block 258. Next a test is made in decision block 258 to see if the last entry in the index table has been processed. If it has, control continues at function block 140 of Figure 5. If not, control flows to block 260 where the next index flag is retrieved for testing in decision block 252.

Returning now to Figure 5, in function block 140, a process is called to build the transformed interchange data stream from the index table. This process is illustrated in Figure 9, to which reference is now made. In block 270, the first index entry is retrieved. The interchange form of that entry is created in function block 272. A test is made in decision block 274 to determine if the last entry has been processed. If not, the next entry is retrieved in block 276, and control flows to function block 272. If the last entry has been processed, control returns to block 140 of Figure 5, and the data stream processor and transform service routine is terminated. At this point, the transformed data stream is returned to the requesting system or application.

Set out below is an illustration of an application program (generalized data stream processor and transform service) usable by a system in a network or by an application in a system of connected applications for causing a universal data stream to be transformed to a specific type and level of that data stream for subsequent processing by the system or application. The program is written in Program Design Language (PDL), and source code in any desired programming language such as Pascal or C can written from the PDL code by a programmer of ordinary skill in the art.

```
Call Proc_Parms(BDT, OPTS)
Call Get_Op_Info
Call Build_OptTBL
Call Init_IndTBL
Call Insert_IEntry
Repeat
   Call Get_Entity(DSEntity, Value, Level)
   If DSEntity is OPTS
      Then If Value NOT in OPTS
            Then Call Get_BValue(DSEntity, Value, Level)
         EndIf
      Else If Level > 0
         Then Repeat
            If entity in Level - 1
               Then Call Get_BValue(DSEntity, Value, Level - 1)
               Else Level := Level - 1
            EndIf
         Until Level = 0
         Else Call Get_BEntity(Level)
               Call Transform(DSEntity)
      EndIf
   EndIf
   Call Insert_IEntry
   If DSEntity or Value Optimizable
      Then Call Set_OFlag(IEntry, DSEntity)
   EndIf
Until All Entities Processed
Call Optimize_IndTBL
Call Build_DS
```

When a request is made to transform one level of an interchange data stream to another level, a routine (Call Proc__Parms(BDT, OPTS)) is called to process the parameters on the first control in the data stream and to determine what options are provided by the data stream level being transformed. If application or operator input is desired to get additional information about interchange level, type or restrictions, a routine (Call Get__Op__Info) is called to solicit input from the application or operator. Next, a routine (Call Build__OptTBL) is called to build an option table or tables for use in the transform process. An interchange index table is used to contain the transformed data stream entities, so a routine (Call Init__IndTBL) is called to initialize the index table. Another routine (Call Insert__IEntry) is called to create and insert the transformed entity representing the first control in the data stream.

After the initialization and setup routines have been executed, a loop is entered during which all remaining entities in the data stream are processed, transformed and stored in the index table. First, a routine (Call Get__Entity(DSEntity, Value, Level)) is called to get the next entity in the data stream (DSEntity) and its value. The function set level (Level) of the entity is also returned from the call. If the entity (DSEntity) is in the function set or options determined by the OPTS variable that was returned from the Proc__Parms routine, then a test is made to see if the value (Value) of DSEntity is also in OPTS. If the value (Value) is not in OPTS, then a routine (Call Get__BValue(DSEntity, Value, Level)) is called to search the other entities belonging to the function set level (Level) to determine the entity and value that most closely matches the input entity (DSEntity). If DSEntity is not in OPTS, a test is made to determine if DSEntity is in a function set whose level is greater than zero. If the level is greater than zero, then a loop is entered to repeatedly check if the entity is in the next lower level of the function set. If it is, then a routine (Call Get__BValue(DSEntity, Value, Level)) is called to determine the best match entity and value from the lower level function set. The loop continues until the base level (Level 0) of the function set is reached. If the level is not greater than zero, then a routine (Call Get__BEntity(Level)) is called to determine the best match from all possible entities belonging to the interchange level to which the data stream is being transformed. A best match value for the best match entity is also determined. Next, a routine (Call Transform__Entity) is called to transform the entity (DSEntity) and value to the best match entity and value.

After determining the best match entity and value, a routine (Call Insert__IEntry) is called to create an index table entry containing the entity and value and to insert the entry into the index table at the correct point. If the entity or value is optimizable or needs to be marked for further processing, such as reference resolution, a routine (Call Set__OFlag(IEntry, DSEntity)) is called to turn on the optimize flag belonging to the entity (DSEntity) whose entry (IEntry) was just inserted into the index table.

Upon completion of the processing of all the entities in the data stream, a process (Call Optimize__IndTBL) is called to look at each entry in the index table to see if any entities need optimizing, and then to optimize that entity or those entities. After all entities have been optimized, another process (Call Build__DS) is called to build the transformed interchange data stream. At this point, the transform process has been completed and the transformed data stream is returned to the system or application requestor.

One advantage of this invention is that a more accurate interpretation and transformation of the data stream is provided insuring that data loss and function misinterpretation are minimized. A second advantage is that operator flexibility is improved because depending on the function level supported, the system can decide to transform a function to a more manageable representation. Another advantage is that the interchange data stream can be optimized enhancing overall system useability.

While the invention has been described in terms of a single preferred embodiment, those skilled in the art will recognize that the invention can be practiced with modification within the spirit and scope of the appended claims.

## Claims

1. In Digital communication system supporting a variety of diverse end user types, a procedure for transforming a level of a universal data stream not supported or required by an application into a level that is supported or required by the application comprising the steps of :
receiving a request from an application to transform a level of the universal data stream into another level;
processing parameters in the data stream to determine what options are provided by the data stream level being transformed;
transforming and storing entities in the data stream in an index table;
building a transformed interchange data stream from stored entities in said index table; and
returning the transformed interchange data stream to the requesting application.

2. The procedure recited in claim 1 further comprising the step of getting additional information about interchange level, type or restrictions from an operator.

3. The procedure recited in claim 2 further comprising the step of building an option table or tables for presentation to the application in order to get additional information about the interchange level, type or restrictions of the data stream.

4. The procedure recited in claim 1 further comprising the steps of :
determining if each input entity and its value in the data stream is in a function set describing the level of the data stream supported or required by the requesting application; and
if not, searching the function set for other entities to determine an entity and value that most closely matches the input entity.

5. The procedure recited in claim 4 further comprising the step of entering a best match entity and value in the index table.

6. The procedure recited in claim 5 further comprising the steps of :
checking each entry in the index table to determine if any entry needs to be optimized; and
optimizing those entities in the index table which are required to be optimized.

# FIG.1

## DATA STREAM EXAMPLE

| BEGIN CONTROL | COMPONENT 1 | COMPONENT 2 | COMPONENT 3 | COMPONENT 4 | ──────── | END CONTROL |
|---|---|---|---|---|---|---|

CONTROL

| CONTROL INTRODUCER | TRIPLET PARAMETER 1 | TRIPLET PARAMETER 2 | TRIPLET PARAMETER 3 | TRIPLET PARAMETER 4 | ────── |
|---|---|---|---|---|---|

FUNCTION SET-BA1a
TYPE= DOCUMENT OBJECT
(X'01)
LEVEL = 1
(X'1000')

FUNCTION SET-PA1a
TYPE = PAGE OBJECT
(X'0A')
LEVEL = BASE
(X'0000')

INTERCHANGE SET-RVRIS8
TYPE= REVISION
(X'02')
LEVEL = 8
(X'0800')

FUNCTION SET-IA4a
TYPE = TAG LOGICAL ELEMENT
(X'59')
LEVEL = BASE
(X'0000')

# FIG.2

SYSTEM STORAGE

31

FUNCTION SET RES. INTERCHANGE SET RES.

APP 3     13

APP 2     12

<REQA3>  23
<DSA1>  22
24  <DSA1RA3>
<DSA1RA3>  16
<DSA1>  21

30
<DSA1RA2>
<REQA2>  22
<DSA1>  21  15
<DSA1>  21

TRANSFORM SERVICE APP

10

LOCAL STORAGE

20

IS-RVRIS8
FS-IA4a
PA1a
BA1a

LOCAL STORAGE

IS-RVRIS7
FS-IA4a (1)
PA1a
BA1a

19

APP 1     11

18  LOCAL STORAGE

IS-RVRIS8
FS-IA4a (1)
PA1a
BA1a (1)

<DSA1>  21

17

NETWORK

FIG.3

TRANSFORM SERVICE ~10

41, <REQUEST>

APPLICATION ~40

<REQUEST> PRESENTATION, LEVEL 8 (PRRIS8)
IMAGE ONLY
41 — <DATA STREAM> REVISION, LEVEL 8 (RVRIS8)
TEXT, GRAPHICS
42

SYSTEM STORAGE

31 —
IS DESC:
REV_PRES
RES COMB
FS DESC:
BASE—ENV
PAGE RES
OBJ INC

FUNCTION SET DESCRIPTIONS:
CATEGORY = OBJECT
CLASS/GROUP = DATA OBJECTS
FUNCTION SET = REV. TEXT (OA1a)  LEVEL 0 = RTD
                                 LEVEL 1 = BRT,ERT,RTX

                GRAPHICS (OA1c)  LEVEL 0 = GDD
                                 LEVEL 1 = BGR,EGR,GAD
45 {                             LEVEL 2 = GDC

                IMAGE  (OA1f)    LEVEL 0 = IDD
                                 LEVEL 1 = BIM,EIM,IPD

CATEGORY = ENVIRONMENT
CLASS/GROUP = ENVIRONMENT GROUPS
46 { FUNCTION SET = DOC. ENV.(EA1a)  LEVEL 0 = BGM,EMG

CLASS/GROUP = ENVIRONMENT STATES
FUNCTION SET = MEDIUM  (EB1a)  LEVEL 0 = MDD
                               LEVEL 1 = MCC,MMC
47 {            PAGE INFO (EB2a)  LEVEL 0 = PGD,PGP
                               LEVEL 1 = PCC,PMC

INTERCHANGE SET DESCRIPTIONS:
TYPE = PRESENTATION

LEVEL 8 (PRRIS8)
44 {  BASE - BA1a                OBJECT - OA1f (1)
      PAGE - PA1a                RESOURCE - RA1a
      ENVIRONMENT- EA1a, EB1a (1), EB2a, EB3a, ED5f

TYPE = REVISION

LEVEL 8 (RVRIS8)
43 {  BASE - BA1a                OBJECT- OA1a(1), OA1c(1)
      PAGE- PA1a                 RESOURCE- RA1a(1)
      ENVIRONMENT - EA1a, EA2a, EA3a, EB1a(1)
                    EB2a, EB3a, EB3b, ED4a, ED4b, ED5a, ED5c

FIG.4

TRANSFORM
SERVICE *10*

TRANSFORM
OPTIONS *50*

FOR PRES (PRRIS8):

OBJ. TYPE
RESTRICTIONS: <u>IMAGE</u>

FUNCTION SET
CATEGORY: <u>BASE</u>
<u>ENVIRONMENT</u> *51*
<u>PAGE</u>
<u>RESOURCE</u>
<u>OBJECT</u>

APPLICATION *40*

ENVIRONMENT
CLASS/GROUP
OPTIONS

ENV. GRPS: <u>DOC. ENV.</u> *52*
ENV. STATES: <u>MEDIUM</u> *53*
<u>PAGE INFO</u>
<u>OBJ INFO</u>
ENV. MAPS: <u>OBJ MAPS</u>

MEDIUM ENVIRONMENT
STATE *54*
(EBIa)
LEVEL 0    MDD *56*
LEVEL 1    MCC
           MMC

ENVIRONMENT GROUPS *55*

DOC. ENVIRONMENT
PAGE ENVIRONMENT
OBJ. ENVIRONMENT

MDD *57*
MSMT. UNITS _____
SIZE        _____
COLOR LID   _____
NAME        _____

FIG.5

```
                    ( BEGIN )
                         |
                    ,110 |
        ┌──────────────────────────────┐
        │ PROCESS BEGIN DATA STREAM     │────( A )
        │ (BDT) SF AND DETERMINE        │
        │ OPTIONS                       │
        └──────────────────────────────┘
                         |
                    ,112 |
        ┌──────────────────────────────┐
        │ PROCESS OPERATOR SUPPLIED     │────( B )
        │ INFO AND BUILD OPTION         │
        │ TABLE (S)                     │
        └──────────────────────────────┘
                         |
                    ,114 |
        ┌──────────────────────────────┐
        │ INITIALIZE INTERCHANGE        │
        │ INDEX TABLE                   │
        └──────────────────────────────┘
                         |
                    ,116 |
        ┌──────────────────────────────┐
        │ CREATE BDT INDEX ENTRY UPDATE │
        │ FOR OPTIONS SPECIFIED BY      │
        │ OPERATOR                      │
        └──────────────────────────────┘
                         |
                    ,118 |
        ┌──────────────────────────────┐
   ┌───▶│ GET NEXT DATA STREAM ENTITY   │
   │    └──────────────────────────────┘
   │                     |
   │              120    |
   │            < ENTITY IN FUNCTION SET >────N────┐
   │                     |                         │
   │                     Y                         │
   │             122     |                  136    │
   │            < ENTITY VALUE IN >──N──┌────────────────────┐
   │              FUNCTION SET          │ SELECT BEST MATCH  │
   │                     |              │ VALUE FROM FUNCTION│
   │                     Y              │ SET                │
   │             124     |              └────────────────────┘
   │    ┌──────────────────────────────┐
   │    │ CREATE INDEX ENTRY, STORE     │
   │    │ ENTITY VALUE IN INDEX         │
   │    └──────────────────────────────┘
   │             126     |
   │            < ENTITY OR VALUE >──N──┐
   │              OPTIMIZABLE OR        │
   │              REFERENCE             │
   │                     |             130
   │                     Y            < MORE ENTITIES >──N──( C )
   │             128     |                    |
   │    ┌──────────────────────────────┐      Y
   └────│ SET OPTIMIZE OR REFERENCE     │
        │ FLAG OF INDEX ENTITY ENTRY    │
        └──────────────────────────────┘
```

```
                    132
                 < LOWER LEVEL OF ENTITY
          Y────<   IN FUNCTION SET        >────N
          │                                    │
     ,135 │                              ,133  │
 ┌──────────────────┐         ┌──────────────────────┐
 │ GET LOWER LEVEL  │         │ SELECT BEST MATCH     │
 │ ENTITY AND SELECT│         │ FROM POSSIBLE ENTITY  │
 │ BEST MATCH VALUE │         │ CHOICES IN FUNCTION   │
 └──────────────────┘         │ SET                   │
                              └──────────────────────┘
                                         |
                                   ,134  |
                              ┌──────────────────────┐
                              │ TRANSFORM INPUT       │
                              │ ENTITY TO BEST        │
                              │ MATCH ENTITY          │
                              └──────────────────────┘
```

```
                    ( C )
                      |
              138 ,   |
        ┌──────────────────┐
        │ OPTIMIZE         │────( D )
        │ INDEX            │
        │ ENTRIES          │
        └──────────────────┘
                      |
              140 ,   |
        ┌──────────────────┐
        │ BUILD INTERCHANGE │────( E )
        │ DATA STREAM FROM  │
        │ INDEX             │
        └──────────────────┘
                      |
                   ( END )
```

## FIG.6

BEGIN 'A'

210 — GET BDT PARAMETER

212 — INTERCHANGE OR FUNCTION SET PARAMETER

N →

Y ↓

214 — DETERMINE LEVEL AND TYPE

216 — GET TABULAR DESCRIPTION

218 — CREATE IS/FS MATRIX RESOURCE AND STORE OPTION INFO ON LEVEL/ TYPE

220 — PROCESS PARAMETER / OPTION INFORMATION

222 — RETRIEVE REFERENCED RESOURCES

224 — STORE OPTION INFO ON RESOURCES AND PROCESSING PARAMETERS

226 — LAST BDT PARAMETER

N →

Y ↓

END 'A'

## FIG.7

BEGIN 'B'

230 — SELECT OPTION

232 — IS/FS LEVEL / TYPE OPTION

238 — PROCESS OPTION SAVE OPTION INFORMATION

N →

Y ↓

234 — IS/FS MATRIX CREATED

240 — GET TABULAR DESCRIPTION . CREATE IS/FS MATRIX RESOURCE

N →

Y ↓

236 — BUILD OPTION TABLE (S)

242 — DISPLAY OPTION TABLE

243 — ALL OPTIONS CHANGED

Y → END 'B'

N →

EP 0 350 421 A2

## FIG.8

```
        ( BEGIN 'D' )
             │        /250
    ┌─────────────────────┐
    │   RESET TO FIRST    │
    │   ENTRY IN INDEX    │
    └─────────────────────┘
             │
             ▼
          ╱       ╲  252
         ╱ OPTIMIZE ╲
        ╱ OR REFERENCE╲────── N ──────┐
         ╲ FLAG SET  ╱                │
          ╲       ╱                   │
             │ Y                      │
             ▼                     /256
        ╱       ╲       ┌─────────────────────┐
  254  ╱  MOST   ╲      │ SELECT MOST EFFICIENT│
      ╱ EFFICIENT ╲─ N ─│ REPRESENTATION AND  │
       ╲REPRESENTATION╱ │ UPDATE INDEX        │
        ╲       ╱       └─────────────────────┘
             │ Y                      │
  ┌──────────┐◄───────────────────────┘
  │GET NEXT  │ 260
  │INDEX ENTRY│
  └──────────┘
             ▲
        258  │ ╱       ╲
      ─ N ───┤  LAST    ╲─ Y ──( END 'D' )
             ╲ INDEX ENTRY╱
              ╲       ╱
```

## FIG.9

```
        ( BEGIN 'E' )
             │        /270
    ┌─────────────────────┐
    │    GET FIRST        │
    │   INDEX ENTRY       │
    └─────────────────────┘
             │
             ▼        /272
    ┌─────────────────────┐
    │ CREATE INTERCHANGE  │
    │   FORM OF ENTRY     │
    └─────────────────────┘
             │
  ┌──────────┐        /274
  │GET NEXT  │     ╱       ╲
  │INDEX ENTRY│─ N ╱  LAST  ╲
  └──────────┘    ╲  ENTRY  ╱
     276           ╲       ╱
                       │ Y
                  ( END 'E' )
```